# EUROPEAN PATENT APPLICATION

(11) **EP 3 369 644 A1**
(43) Date of publication of application: **05.09.2018**
(21) Application number: 16859439.8
(22) Date of filing: 20.09.2016
(51) Int. Cl.: B62D 5/04

(54) **SENSOR DEVICE AND ELECTRIC POWER STEERING DEVICE**

(30) Priority: 27.10.2015 JP 2015211126
(71) Applicant: KYB Corporation, Tokyo 105-6111 (JP)
(72) Inventor: OWAKI, Junichi, Tokyo 105-6111 (JP); MURASE, Tomoyuki, Tokyo 105-6111 (JP)
(74) Representative: Grünecker Patent- und Rechtsanwälte PartG mbB
(86) International application number: PCT/JP2016/077695
(87) International publication number: WO 2017/073202

(57) **Abstract**

A sensor device 100 includes the main and subsidiary sensors 41 and 42 configured to detect steering torques of the electric power steering device 101, the first and second internal power sources 43 and 44, the first and second power lines 50 and 51 connected to the first and second internal power sources 43 and 44, respectively, the first and second power lines 50 and 51 being configured to supply power to both the main and subsidiary sensors 41 and 42 from the respective internal power source, and the first and second changeover switches 45 and 46 configured to selectively change the power line used to supply power to both the main and subsidiary sensors 41 and 42 between the first and second power lines 50 and 51.

## Description

### TECHNICAL FIELD

The present invention relates to a sensor device and an electric power steering device.

### BACKGROUND ART

JP2015-34737A discusses a sensor device for an electric power steering device having a plurality of power sources for supplying power to a plurality of sensors.

### SUMMARY OF INVENTION

The sensor device discussed in JP2015-34737A has a plurality of sensors to provide redundancy for improving safety of the electric power steering device by reliably detecting condition. However, in this sensor device, a plurality of sensors are respectively supplied with power from a plurality of independent power sources. For this reason, when a power source is failed, a sensor corresponding to the failed power source is also failed. This may degrade redundancy.

It is therefore an object of the invention to improve detection stability in the sensor device of the electric power steering device.

According to one aspect of the present invention, a sensor device for an electric power steering device, includes a plurality of detection units configured to detect identical condition information of the electric power steering device; a plurality of power sources; a plurality of power lines connected to the respective plurality of power sources, the plurality of power lines being configured to supply power to all of the plurality of detection units from the respective power sources; and a changeover unit configured to selectively change the power line that supplies power to the plurality of detection units among the plurality of power lines.

### BRIEF DESCRIPTION OF DRAWINGS

FIG. 1 is a schematic diagram illustrating an electric power steering device according to an embodiment of the invention; and
FIG. 2 is a block diagram illustrating a sensor device according to an embodiment of the invention.

### DESCRIPTION OF EMBODIMENTS

An embodiment of the invention will now be described with reference to the accompanying drawings.

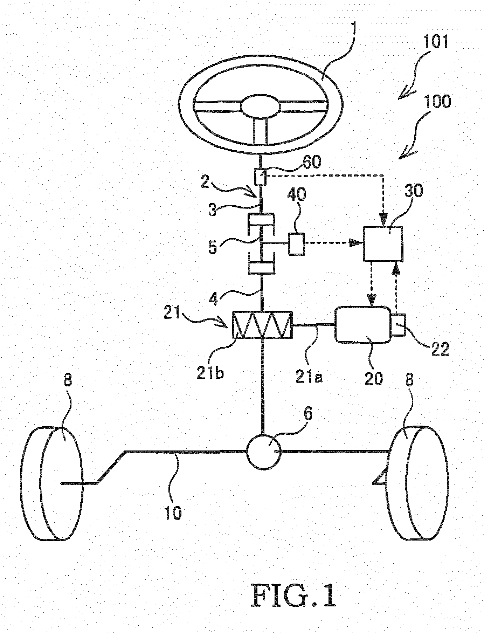

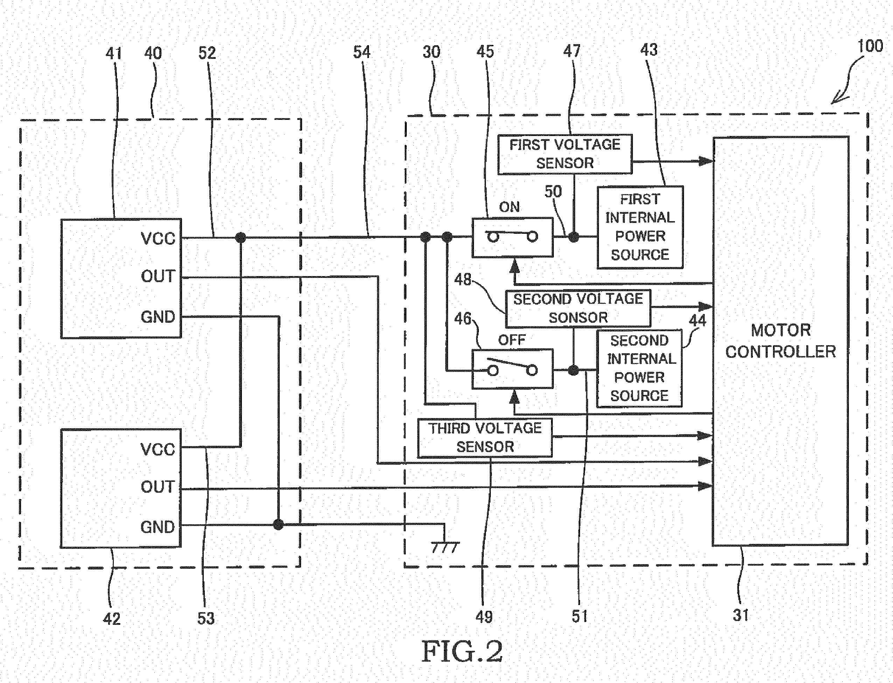

First, a whole system configuration including a sensor device 100 and an electric power steering device 101 according to an embodiment of the invention will be described with reference to FIGS. 1 and 2.

As illustrated in FIG. 1, the electric power steering device 101 includes an input shaft 3 rotated by a steering torque input from a steering wheel 1, an output shaft 4 having a lower end connected to a rack shaft 10, and a torsion bar 5 that connects the input shaft 3 and the output shaft 4 to each other. The electric power steering device 101 steers traveling wheels 8 by moving the rack shaft 10 meshing with a pinion 6 provided in the lower end of the output shaft 4 in an axial direction. The input shaft 3 and the output shaft 4 constitute a steering shaft 2.

The electric power steering device 101 further has an electric motor 20 serving as a power source for assisting driver's steering operation for the steering wheel 1, a reduction gear (reduction device) 21 that deceleratingly transmits rotation of the electric motor 20 to the steering shaft 2, a sensor device 100 that detects a steering torque as condition information of the electric power steering device 101, and an electronic control unit (ECU) 30 having a motor controller 31 (refer to FIG. 2) that controls operation of the electric motor 20 on the basis of a detection result of the sensor device 100.

The electric motor 20 has a resolver 22 serving as an angle detector that detects a rotation angle of the electric motor 20. A detection result of the resolver 22 is output to the motor controller 31. The motor controller 31 calculates a rotation speed of the electric motor 20 on the basis of the detection result of the resolver 22. Alternatively, without limiting to the resolver 22, any device capable of detecting a rotation angle of the electric motor 20 may be employed as the angle detector. For example, the angle detector may include a Hall sensor, or the like.

The reduction gear 21 has a worm shaft 21a connected to a rotation shaft (not shown) of the electric motor 20 and a worm wheel 21b that is connected to the output shaft 4 and meshes with the worm shaft 21a. The torque output from the electric motor 20 is transmitted from the worm shaft 21a to the worm wheel 21b and is applied to the output shaft 4 as the assist torque.

As illustrated in FIG. 2, the sensor device 100 includes a torque sensor 40 that detects a steering torque input from the steering wheel 1, first and second internal power sources 43 and 44 as a plurality of power sources provided in the ECU 30, a first power line 50 capable of supplying power from the first internal power source 43 to the torque sensor 40, a second power line 51 capable of supplying power from the second internal power source 44 to the torque sensor 40, a first changeover switch 45 provided in the first power line 50 to change over the first power line 50 between connection and disconnection, and a second changeover switch 46 provided in the second power line 51 to change over the second power line 51 between connection and disconnection.

The torque sensor 40 detects a steering torque applied to the torsion bar 5 on the basis of relative rotation between the input shaft 3 and the output shaft 4. A detection result of the torque sensor 40 is output to the motor controller 31. The motor controller 31 calculates a torque output from the electric motor 20 on the basis of the detection result from the torque sensor 40 and controls operation of the electric motor 20 to generate the calculated torque. In this manner, the electric power steering device 101 drives the electric motor 20 on the basis of the detection result of the torque sensor 40 that detects the steering torque input from the steering wheel 1 and assists driver's steering operation for the steering wheel 1.

The torque sensor 40 has a main sensor 41 and a subsidiary sensor 42 as detection units. Each of the main and subsidiary sensors 41 and 42 detects the steering torque applied to the torsion bar 5 and outputs it to the motor controller 31. The motor controller 31 controls operation of the electric motor 20 on the basis of the detection result of the main sensor 41. In addition, the motor controller 31 compares output voltages of the main and subsidiary sensors 41 and 42 to determine whether or not an abnormality occurs in the torque sensor 40. That is, the torque sensor 40 further has the subsidiary sensor 42 for determining an abnormality in the torque sensor 40 as a detection unit for detecting the torque in addition to the main sensor 41 for controlling operation of the electric motor 20. In this manner, since the torque sensor 40 has a pair of sensors, it is possible to determine whether or not an abnormality occurs in the torque sensor 40.

The first and second supply lines 52 and 53 are connected to the main and subsidiary sensors 41 and 42, respectively. Power is supplied to the main and subsidiary sensors 41 and 42 through the first and second supply lines 52 and 53. Each of the first and second supply lines 52 and 53 is connected to a common line 54. The common line 54 is connected to the first and second power lines 50 and 51. Therefore, each of the first and second internal power sources 43 and 44 can supply power to both the main and subsidiary sensors 41 and 42 through the first or second power line 50 or 51, the common line 54, and the first and second supply line 52 and 53. That is, the torque sensor 40 and the ECU 30 are electrically connected to each other through the common line 54.

Since the torque sensor 40 and the ECU 30 are connected to each other through the common line 54, it is possible to reduce a wire length. Alternatively, the torque sensor 40 and the ECU 30 may be connected, for example, by separately providing a line (lines) for connecting the first power line 50 to the first supply line 52 and the second supply line 53 and a line (lines) for connecting the second power line 51 to the first supply line 52 and the second supply line 53.

A first voltage sensor 47 for detecting a voltage value of the first power line 50 is provided between the first changeover switch 45 and the first internal power source 43 in the first power line 50. A second voltage sensor 48 for detecting a voltage value of the second power line 51 is provided between the second changeover switch 46 and the second internal power source 44 in the second power line 51. The common line 54 has a third voltage sensor 49 for detecting a voltage value supplied to the torque sensor 40. Detection results of the first, second, and third voltage sensors 47, 48, and 49 are output to the motor controller 31.

The motor controller 31 controls the on/off states of the first and second changeover switches 45 and 46 on the basis of the detection results of the first, second, and third voltage sensors 47, 48, and 49. As the on/off states of the first and second changeover switches 45 and 46 are changed over, one of the first internal power source 43 and the second internal power source 44 can be selected as a power source which supplies power to both the main and subsidiary sensors 41 and 42. In this manner, the first and second changeover switches 45 and 46 constitute a changeover unit for selectively changing the power line for supplying power to the main and subsidiary sensors 41 and 42 between the first and second power lines 50 and 51.

As illustrated in FIG. 1, the steering shaft 2 has a steering angle sensor 60 that detects a steering angle of the steering wheel 1. A detection result of the steering angle sensor 60 is output to the motor controller 31.

The motor controller 31 has a central processing unit (CPU) that controls operation of the electric motor 20, a read-only memory (ROM) that stores control programs, setup values, and the like necessary in the processing of the CPU, and a random-access memory (RAM) that temporarily stores information detected by various sensors such as the torque sensor 40, the resolver 22, and the steering angle sensor 60.

Next, functions of the electric power steering device 101 and the sensor device 100 will be described with reference to FIG. 2.

During a normal state in which both the first and second internal power sources 43 and 44 are operated normally, the first changeover switch 45 is changed over to ON, and connection of the first power line 50 is allowed as illustrated in FIG. 2. Meanwhile, the second changeover switch 46 is changed over to OFF, and the second power line 51 is disconnected. As a result, the main and subsidiary sensors 41 and 42 are supplied with power from the first internal power source 43 through the first power line 50, the common line 54, and the first and second supply lines 52 and 53. The main and subsidiary sensors 41 and 42 are supplied with power from the first internal power source 43, detect the steering torques respectively, and output the steering torques to the motor controller 31.

The motor controller 31 controls rotation of the electric motor 20 on the basis of the detection result of the main sensor 41. As a result, the assist torque is applied from the electric motor 20 to the steering shaft 2.

The motor controller 31 determines whether or not an abnormality occurs in the torque sensor 40 by comparing detection results between the main and subsidiary sensors 41 and 42. In this manner, the subsidiary sensor 42 is provided to determine an abnormality of the torque sensor 40.

The motor controller 31 determines whether or not there is an abnormality in the first and second internal power sources 43 and 44 on the basis of the detection results of the first and second voltage sensors 47 and 48. For example, when an abnormal value is detected in the voltage signal of the first internal power source 43 that supplies power in a normal state, the motor controller 31 determines that there is an abnormality in the first internal power source 43. In addition, the motor controller 31 determines whether or not there is an abnormality in the first changeover switch 45 on the basis of the detection results of the first and third voltage sensors 47 and 49.

If the motor controller 31 determines that there is no abnormality in the first and second internal power sources 43 and 44, a state in which the first changeover switch 45 is set to ON, and the second changeover switch 46 is set to OFF is maintained. That is, a power supply state from the first internal power source 43 to the main and subsidiary sensors 41 and 42 is maintained.

If the first or third voltage sensor 47 or 49 detects an abnormal value in the voltage signal, and the motor controller 31 determines that there is an abnormality in the first internal power source 43 or the first changeover switch 45, a signal for changing over the first changeover switch 45 to OFF and a signal for setting the second changeover switch 46 to ON are output from the motor controller 31. As a result, the internal power source for supplying power to the main and subsidiary sensors 41 and 42 is changed over from the first internal power source 43 to the second internal power source 44.

Here, if detection of a steering torque using the torque sensor 40 is not allowed, it is difficult to apply a suitable assist torque from the electric motor 20, and operation of the steering wheel 1 becomes heavy. If the operation of the steering wheel 1 becomes heavy in this manner, a problem occurs in a driver's steering operation, and safe driving may be difficult. Therefore, the torque sensor 40 particularly requires detection stability of the steering torque in order to secure safety during traveling. For this reason, the torque sensor 40 determines an abnormality in the torque sensor 40 using a pair of sensors including the main and subsidiary sensors 41 and 42 to provide redundancy for improving safety of the electric power steering device 101.

When power is supplied from a single internal power source to a pair of sensors including the main and subsidiary sensors 41 and 42 of the torque sensor 40, and the internal power source is failed, both the main and subsidiary sensors 41 and 42 are failed at the same time. In addition, when power is independently supplied from a pair of internal power sources to the main and subsidiary sensors 41 and 42, respectively, and one of the internal power sources is failed, one of the main and subsidiary sensors 41 and 42 corresponding to the failed internal power source is failed. Therefore, in this case, detection stability using the torque sensor 40 becomes insufficient.

In comparison, in the sensor device 100, each of the first and second internal power sources 43 and 44 can supply power to both the main and subsidiary sensors 41 and 42, and the power source that supplies the power is changed over by the first and second changeover switches 45 and 46. Therefore, even when any one of the internal power sources is failed, the power supply state to the main and subsidiary sensors 41 and 42 is maintained by changing over the power source that supplies power. Therefore, the sensor device 100 can stably detect a steering torque. Accordingly, it is possible to apply a suitable assist torque to the steering shaft 2 from the electric motor 20 and secure safety of a vehicle.

Since the sensor device 100 consumes power less than the electric motor 20 or the like, cost does not significantly increase even when a pair of first and second internal power sources 43 and 44 are provided. That is, using the sensor device 100, it is possible to secure safety of a vehicle while reducing a cost increase.

Next, a modification of the aforementioned embodiment will be described.

In the aforementioned embodiment, the main and subsidiary sensors 41 and 42 that detect the steering torque correspond to a plurality of detection units. Alternatively, a plurality of steering angle sensors 60 may be employed as a plurality of detection units. In addition, both the plurality of torque sensors 40 and the plurality of steering angle sensors 60 may be employed as the detection units. The condition information of the electric power steering device 101 includes information regarding a steering torque, a steering angle, and the like, detected by various sensors and used in the electric power steering device 101.

According to the aforementioned embodiment, it is possible to obtain the following effects.

In the sensor device 100, the first and second internal power sources 43 and 44 can supply power to both the main and subsidiary sensors 41 and 42 of the torque sensor 40 through the first and second power lines 50 and 51, respectively. For this reason, even when one of the first and second internal power sources 43 and 44 is failed, the power supply state to both the main and subsidiary sensors 41 and 42 is maintained by changing over the power line that supplies power to the main and subsidiary sensors 41 and 42 using the first and second changeover switches 45 and 46. Therefore, it is possible to improve detection stability of the sensor device 100 of the electric power steering device 101.

Using the sensor device 100, it is possible to maintain the power supply state to the main and subsidiary sensors 41 and 42 of the torque sensor 40 and allow the sensor device 100 to stably detect the steering torque. Therefore, it is possible to apply a suitable assist torque to the steering shaft 2 from the electric motor 20 and secure safety of a vehicle.

A configuration, functions, and effects according to the embodiment of the invention will now be described in summary.

The sensor device 100 for the electric power steering device 101 includes the main and subsidiary sensors 41 and 42 configured to detect steering torques as identical condition information of the electric power steering device 101, the first and second internal power sources 43 and 44, the first and second power lines 50 and 51 connected to the first and second internal power sources 43 and 44, respectively, the first and second power lines 50 and 51 being configured to supply power to both the main and subsidiary sensors 41 and 42 from the respective internal power source, and the changeover unit (including the first and second changeover switches 45 and 46) configured to selectively change the power line used to supply power to both the main and subsidiary sensors 41 and 42 among the power lines (the first and second power lines 50 and 51).

In the sensor device 100, the changeover unit includes the first and second changeover switches 45 and 46 provided in the first and second power lines 50 and 51, respectively, the changeover unit being configured to change over the first and second power lines 50 and 51 between connection and disconnection.

In this configuration, the first and second internal power sources 43 and 44 can supply power to both the main and subsidiary sensors 41 and 42 through the first and second power lines 50 and 51, respectively. For this reason, even when one of the internal power sources is failed, the power supply state to both the main and subsidiary sensors 41 and 42 is maintained by changing over the power line used to supply power to the main and subsidiary sensors 41 and 42 using the changeover unit (including the first and second changeover switches 45 and 46). Therefore, it is possible to improve detection stability of the sensor device 100 of the electric power steering device 101.

In the sensor device 100, the detection unit is configured to detect a steering torque input from the steering wheel 1.

In this configuration, since the power supply state to the main and subsidiary sensors 41 and 42 is maintained, it is possible to allow the sensor device 100 to stably detect the steering torque. Therefore, it is possible to apply a suitable assist torque to the steering shaft 2 from the electric motor 20 and secure safety of a vehicle.

In the sensor device 100, the changeover unit (including the first and second changeover switches 45 and 46) is configured to change over the power line used to supply power to the main and subsidiary sensors 41 and 42 on the basis of the voltage values of the first and second power lines 50 and 51.

In this configuration, a failure in the first or second internal power source 43 or 44 is detected on the basis of the voltage values of the first and second power lines 50 and 51, and the power line used to supply power to the main and subsidiary sensors 41 and 42 is changed over.

The electric power steering device 101 includes the steering shaft 2 configured to rotate by receiving a steering torque from the steering wheel 1, an electric motor 20 configured to apply a rotational torque for assisting the steering torque to the rack shaft 10, the rack shaft 10 being configured to steer the traveling wheel 8, the sensor device 100 described in any one of the aforementioned configurations, and the motor controller 31 configured to control operation of the electric motor 20 on the basis of a detection result of the sensor device 100.

Embodiments of this invention were described above, but the above embodiments are merely examples of applications of this invention, and the technical scope of this invention is not limited to the specific constitutions of the above embodiments.

This application claims priority based on Japanese Patent Application No.2015-211126 filed with the Japan Patent Office on October 27, 2015, the entire contents of which are incorporated into this specification.

## Claims

1. A sensor device for an electric power steering device, comprising:
a plurality of detection units configured to detect identical condition information of the electric power steering device;
a plurality of power sources;
a plurality of power lines connected to the respective plurality of power sources, the plurality of power lines being configured to supply power to all of the plurality of detection units from the respective power sources; and
a changeover unit configured to selectively change the power line that supplies power to the plurality of detection units among the plurality of power lines.

2. The sensor device according to claim 1, wherein
the changeover unit includes changeover switches provided in the respective plurality of power lines, the changeover switches being configured to change over the power lines between connection and disconnection.

3. The sensor device according to claim 1, wherein
the detection units are configured to detect a steering torque input from a steering wheel.

4. The sensor device according to claim 1, wherein
the changeover unit is configured to change over the power lines that supply power to the plurality of detection units on the basis of voltage values of the power lines.

5. An electric power steering device comprising:
a steering shaft configured to rotate by receiving a steering torque from a steering wheel;
an electric motor configured to apply a rotational torque for assisting the steering torque to a rack shaft, the rack shaft being configured to steer a traveling wheel;
the sensor device according to claim 1; and
a motor controller configured to control operation of the electric motor on the basis of a detection result of the sensor device.
